# EUROPEAN PATENT SPECIFICATION

(11) **EP 3 702 864 B1**
(45) Date of publication and mention of the grant of the patent: **27.10.2021**
(21) Application number: 19159564.4
(22) Date of filing: 27.02.2019
(51) Int. Cl.: G05D 1/00

(54) **ACCOUNTING FOR LATENCY IN TELEOPERATED REMOTE DRIVING**
BERECHNUNG DER LATENZ BEIM TELEBETRIEBENEN FERNFAHREN
PRISE EN COMPTE DE LA LATENCE DANS LA CONDUITE À DISTANCE TÉLÉCOMMANDÉE

(43) Date of publication of application: 02.09.2020
(73) Proprietor: Ree Technology GmbH, 12099 Berlin (DE)
(72) Inventor: Schierl, Thomas, 12099 Berlin (DE); von der Ohe, Thomas, 12099 Berlin (DE); Djukic, Bogdan, 12099 Berlin (DE); Scelsi, Fabrizio, 12099 Berlin (DE); Gerke, Sebastian, 12099 Berlin (DE)
(74) Representative: Eisenführ Speiser

(56) References cited:
- EP-A1- 3 333 662
- WO-A1-2018/106752
- WO-A1-2019/015876
- US-A1- 2011 087 371

## Description

### FIELD OF THE INVENTION

The present invention relates to a teleoperator station and a teleoperation method for use by a teleoperator to remotely drive a vehicle via a wireless communication network. Moreover, the present invention relates to a system for remotely driving a vehicle.

### BACKGROUND OF THE INVENTION

Teleoperated remote driving of a vehicle is considered by many to be a transient technology toward fully autonomous driving in urban areas. In this mobility concept, a teleoperator uses a teleoperator station to remotely drive the vehicle via a wireless communication network. To this end, the teleoperator station receives a live video stream providing a view of the vehicle's environment from the vehicle and displays the live video stream to the teleoperator. The teleoperator reacts to the live video stream by using a control interface provided by the teleoperator station to generate drive control commands for controlling the driving of the vehicle. The drive control commands are sent from the teleoperator station to the vehicle.

The transmission of the live video stream of the vehicle's environment from the vehicle to the teleoperator station and the transmission of the drive control commands from the teleoperator station to the vehicle introduces a latency (time delay) into the teleoperation control loop. Due to this latency, the teleoperator is only presented with a 'past' rather than a 'current' view of the vehicle's environment and also the drive control commands can be executed by the vehicle only some time after they were generated by the teleoperator's reaction. The vehicle may then already be in a quite different situation compared to what has been perceived by the teleoperator in the live video stream.

Depending in the size of the latency, the non-real time behaviour introduced by the transmission time delay can thus severely impair the teleoperator's ability to correctly and safely remotely drive the vehicle, in particular, in crowded inner-city areas with a highly dynamic environment.

US 2011/0087371 A1 discloses a method and apparatus for controlling a telepresence robot with a conventional pointing device such as a mouse, trackball, or touchpad. In an alternative embodiment of the invention, a method for controlling a telepresence robot within a joystick is described.

WO 2018/106752 A1 describes methods, apparatuses, systems, and non-transitory computer readable storage media for providing bandwidth constrained image processing. The disclosed technology determines a data transfer rate of at least one signal received from a vehicle, the at least one signal including state/status data of the vehicle. In response to determining that the data transfer rate satisfies a data transfer rate criterion, a location of the vehicle and a location of at least one of a plurality of objects that obstruct at least one signal is determined using the state data and external data associated with the vehicle. The disclosed technology generates optimized state data using the state data and the external data.

WO 2019/015876 A1 discloses a method and a device for providing environment information describing the environment of a vehicle. The method comprises the steps of detecting environment information by means of a sensor arranged on the vehicle, said information representing the environment of the vehicle, determining a latent time which describes the delay between detection of the environment information and a possible display of the environment information on a terminal, determining an anticipated path of movement of the vehicle, calculating corrected environment information from the detected environment information, the detected environment information being corrected on the basis of the latent time and the path of movement of the vehicle in such a way that said corrected information representing the environment of the vehicle as would be anticipated by the environment information detected by the sensor if the vehicle were to move along the anticipated path of movement for the duration of the determined latent time, and providing the corrected environment information for the terminal.

### SUMMARY OF THE INVENTION

It is an object of the present invention to provide a teleoperator station and a teleoperation method for use by a teleoperator to remotely drive a vehicle via a wireless communication network that overcomes or at least reduces the problems associated with latency in the teleoperation control loop. It is a further object of the present invention to provide a system for remotely driving a vehicle.

In a first aspect of the present invention, a teleoperator station for use by a teleoperator to remotely drive a vehicle via a wireless communication network is presented, comprising:
- a communication unit for receiving a live representation of the vehicle's environment from the vehicle and for sending drive control commands for controlling the driving of the vehicle to the vehicle;
- a processing unit for processing the live representation to generate a visualization of the vehicle's environment that considers a latency of the wireless communication network;
- a display unit for displaying the visualization to the teleoperator; and
- a control interface for use by the teleoperator to generate the drive control commands in response to the visualization,
   wherein the communication unit is adapted to further receive measured drive state information indicative of an actual steering state, an actual drive speed and, optionally, an actual drive acceleration / deceleration from the vehicle, wherein the processing unit is adapted to generate the visualization based on the measured drive state information,
   wherein the processing unit is adapted to generate the visualization such that it includes graphical indicators representing two pathways of the vehicle, wherein the first pathway is determined based on the measured drive state information and the second pathway is determined based on the current drive control commands, or
   wherein the processing unit is adapted to generate the visualization such that it includes graphical indicators representing a combination pathway of the vehicle, wherein a first portion of the combination pathway is determined based on the measured drive state information and a second portion of the combination pathway is determined based on the current drive control commands.

Since the processing unit processes the live representation of the vehicle's environment to generate a visualization of the vehicle's environment that considers a latency of the wireless communication network, the teleoperator can be presented with visual information that gives him/her an improved awareness of the current state of the environment of the vehicle. This can improve the teleoperator's ability to correctly and safely remotely drive the vehicle under a condition of latency, in particular, in crowded inner-city areas with a highly dynamic environment.

The wireless communication network is preferably a network that allows for a bi-directional transmission of data between the vehicle and the teleoperator station. For example, it can be a fourth generation (4G) wireless communication network or a fifth generation (5G) wireless communication network.

The vehicle is preferably a car, such as a small car, a regular car, or a Sports Utility Vehicle (SUV), a van, a truck or another type of vehicle that is adapted to be remotely driven. For example, it may also be a buggy or the like.

Preferably, the vehicle is a modified vehicle that provides the required on-board infrastructure for teleoperation. This can include actuators for controlling the vehicle, one or more capturing units for capturing a live representation of the vehicle's environment, and appropriate interfaces for bi-directional communication with the teleoperator station via the wireless communication network. The actuators can be mechanical actuators that directly actuate on the vehicle's steering wheel, speed pedal and brakes. Alternatively, already present actuators of the vehicle (e.g., for adjusting the orientation of the vehicle's wheels) may be controlled via an electronic interface.

It is further preferred that the live representation comprises a live video stream of the vehicle's environment, wherein the processing unit is adapted to generate the visualization such that the graphical indicators representing the two pathways or the combination pathway are overlaid on the live video stream.

It is preferred that the processing unit is adapted to generate the visualization such that it includes graphical indicators representing one or more of: (i) the actual drive acceleration / deceleration, (ii) an acceleration / deceleration according to the current drive control commands, (iii) a combined acceleration / deceleration determined from (i) and (ii), and (iv) an expected halting position determined from (iii).

It is further preferred that the live representation comprises a live video stream, wherein the processing unit is adapted to generate the visualization by adjusting the viewing direction and/or the viewpoint in the live video stream based on the latency and the measured drive state information.

It is preferred that the adjustment further comprises a geometrical adjustment of an object depicted in the live video stream.

It is further preferred that the geometrical adjustment is based on an estimated depth information of the object and/or an estimated motion of the object.

It is preferred that the live video stream comprises a live panoramic video stream or a live spherical stream.

It is further preferred that the processing unit is adapted to generate the visualization such that it includes graphical indicators representing forbidden areas that the vehicle is not allowed to enter.

It is preferred that the forbidden areas include one or more of: (i) dynamically determined safety areas for moving objects, and (ii) pre-defined forbidden geographical areas.

It is further preferred that the control interface is adapted to prevent the teleoperator from remotely driving the vehicle to enter the forbidden areas.

It is preferred that the live representation comprises simplified descriptions of objects and their positions and movements in the vehicle's environment, wherein the processing unit is adapted to generate the visualization as a virtual reality representation of the vehicle's current environment based on the simplified descriptions.

In a further aspect of the present invention, a system for remotely driving a vehicle is presented, comprising:
- a vehicle that is adapted to be remotely driven by a teleoperator via a wireless communication network; and
- the teleoperator station as defined in any of claims 1 to 11.

In a further aspect of the present invention, a teleoperation method for use by a teleoperator to remotely drive a vehicle via a wireless communication network is presented, comprising:
- receiving a live representation of the vehicle's environment from the vehicle and sending drive control commands for controlling the driving of the vehicle to the vehicle, by a communication unit;
- processing the live representation to generate a visualization of the vehicle's environment that considers a latency of the wireless communication network, by a processing unit;
- displaying the visualization to the teleoperator, by a display unit; and
- using a control interface, by the teleoperator, to generate the drive control commands in response to the visualization,
   wherein the communication unit further receives measured drive state information indicative of an actual steering state, an actual drive speed and, optionally, an actual drive acceleration / deceleration from the vehicle, wherein the processing unit is adapted to generate the visualization based on the measured drive state information, characterized by:
   generating, by the processing unit, the visualization such that it includes graphical indicators representing two pathways of the vehicle, wherein the first pathway is determined based on the measured drive state information and the second pathway is determined based on the current drive control commands, or
   generating, by the processing unit, the visualization such that it includes graphical indicators representing a combination pathway of the vehicle, wherein a first portion of the combination pathway is determined based on the measured drive state information and a second portion of the combination pathway is determined based on the current drive control commands.

It shall be understood that the teleoperator station of claim 1, the system of claim 12 and the teleoperation method of claim 13 have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

These and other aspects of the present invention will be apparent from and elucidated with reference to the embodiments described hereinafter. In the following drawings:
- Fig. 1: shows schematically and exemplarily an embodiment of a system for remotely driving a vehicle,
- Fig. 2: shows schematically and exemplarily one variant of how a visualization of the vehicle's environment that considers the latency of a wireless communication network can be generated,
- Fig. 3: shows schematically and exemplarily another variant of how a visualization of the vehicle's environment that considers the latency of the wireless communication network can be generated,
- Fig. 4: shows schematically and exemplarily a further variant of how a visualization of the vehicle's environment that considers the latency of the wireless communication network can be generated,
- Fig. 5: shows schematically and exemplarily a yet further variant of how a visualization of the vehicle's environment that considers the latency of the wireless communication network can be generated, and
- Fig. 6: shows a flowchart exemplarily illustrating an embodiment of a teleoperation method for use by a teleoperator to remotely drive a vehicle via a wireless communication network.

### DETAILED DESCRIPTION OF EMBODIMENTS

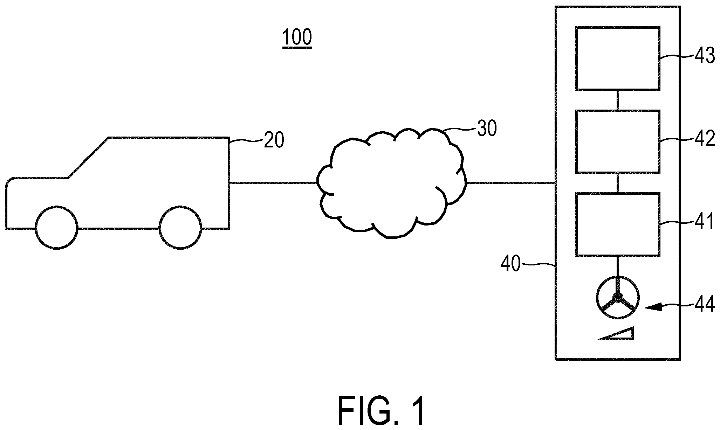

Fig. 1 shows schematically and exemplarily an embodiment of a system 100 for remotely driving a vehicle 20. The system 100 comprises a vehicle 20 that is adapted to be remotely driven by a teleoperator via a wireless communication network 30. Moreover, the system 100 comprises a teleoperator station 40 for use by the teleoperator to remotely drive the vehicle 20 via the wireless communication network 30.

In this embodiment, the vehicle 20 is a modified car that provides the required on-board infrastructure for teleoperation. This can include actuators for controlling the vehicle 20, one or more capturing units for capturing a live representation of the vehicle's environment, and appropriate interfaces for bi-directional communication with the teleoperator station 40 via the wireless communication network 30. The actuators can be mechanical actuators that directly actuate on the vehicle's steering wheel, speed pedal and brakes. Alternatively, already present actuators of the vehicle (e.g., for adjusting the orientation of the vehicle's wheels) may be controlled via an electronic interface.

The teleoperator station 40 comprises a communication unit 41 for receiving the live representation of the vehicle's environment from the vehicle 20 and for sending drive control commands for controlling the driving of the vehicle 20 to the vehicle 20. Moreover, the teleoperator station 40 comprises a direct interface for the teleoperator. This includes a display unit 43, such as one or more monitors or other display device(s) (e.g., a head-mounted display (HMD), a projection display, or the like), as well as a control interface 44, such as a steering wheel and pedals, to generate the drive control commands. This provides the basic teleoperation functionality. For additional control of the vehicle 20, such as its blinkers, wipers, lights, et cetera, supplementary control keys or the like may be provided by the teleoperator station 40.

The wireless communication network 30 is a network that allows for a bi-directional transmission of data between the vehicle 20 and the teleoperator station 40. For example, it can be a fourth generation (4G) wireless communication network or a fifth generation (5G) wireless communication network. The transmitted data includes the drive control commands for controlling the actuators in the vehicle 20, which are transmitted from the teleoperator station 40 to the vehicle 20, as well as the live representation of the vehicle's environment, which is transmitted from the vehicle 20 to the teleoperator station 40. In addition to this, further data can be exchanged between the vehicle 20 and the teleoperator station 40, such as information about the status of the vehicle 20 (e.g., drive speed, rpm, error information, and the like) or synchronization information, such as transmission timestamps.

The transmission of the live representation of the vehicle's environment from the vehicle 20 to the teleoperator station 40 and the transmission of the drive control commands from the teleoperator station 40 to the vehicle 20 introduces a latency (time delay) into the teleoperation control loop. In order to aid the teleoperator in remotely driving the vehicle 20 under this condition, the teleoperator station 40 further comprises a processing unit 42 for processing the live representation to generate a visualization of the vehicle's environment that considers the latency of the wireless communication network 30, a display unit 43 for displaying the visualization to the teleoperator, and a control interface 44 for use by the teleoperator to generate the drive control commands in response to the visualization.

In the following, we describe preferred variants of how the visualization may be generated by the processing unit 42:
In some variants, the communication unit 41 is adapted to further receive measured drive state information indicative of an actual steering state, an actual drive speed and, optionally, an actual drive acceleration / deceleration from the vehicle 20. To this end, the vehicle 20 preferably comprises appropriate sensors for measuring the actual drive state information. For example, the vehicle 20 may comprise a first sensor for continuously measuring the steering state of the steering wheel or the orientation of the vehicle wheels, a second sensor for measuring the drive speed of the vehicle 20, and a third and/or fourth sensor for measuring the brake and/or throttle status of the vehicle 20. The vehicle 20 transmits the measured drive state information to the teleoperator station 40, where it is received by the communication unit 41. The processing unit 42 is adapted to generate the visualization based on the measured drive state information.

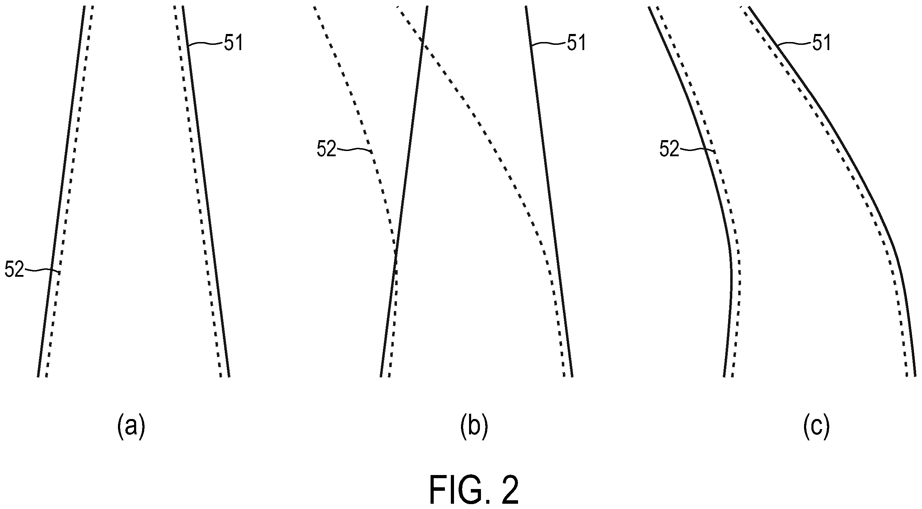

In one variant, the processing unit 42 is adapted to generate the visualization such that it includes graphical indicators 51 and 52 representing two pathways of the vehicle 20. This is shown schematically and exemplarily in Fig. 2. The first pathway (here represented as a solid line) is determined based on the measured drive state information and the second pathway (here represented as a stippled line) is determined based on the current drive control commands.

In more detail, the processing unit 42 receives the drive control commands that are currently being generated by the teleoperator using the control interface 44. Using a calibrated model of the vehicle 20, the processing unit 42 then determines a curvature of the second pathway. By doing so, the second pathway represents the pathway that the vehicle 20 would take without the latency in the teleoperation control loop. The graphical indicators 52 representing the second pathway provide an immediate feedback to the teleoperator on how the control changes he/she makes are going to propagate to the vehicle 20.

In contrast, since the measured drive state information is transmitted from the vehicle 20 to the teleoperator station 40, it is affected by the latency. The first pathway therefore represent the pathway that the vehicle 20 would take if the measured drive state of the vehicle 20 would be maintained. The graphical indicators 51 representing the first pathway thus provide a feedback to the teleoperator of the drive state of the vehicle 20 at the time of measurement.

By generating a visualization that provides both an immediate feedback based on the current drive control commands (i.e., the graphical indicators 52 representing the second pathway) and a feedback from the vehicle 20 (i.e., the graphical indicators 51 representing the first pathway), the latency of the communication network 30 is made very transparent to the teleoperator. This can help, for instance, to avoid oversteering, which is known to happen frequently if the teleoperator does not see an immediate effect on his/her actions.

The two-pathway visualization shall now be explained further with reference to Fig. 2. In Fig. 2 (a), the vehicle 20 is driving straight and the graphical indicators 51 and 52 representing the two pathways are aligned. Then, in Fig. 2 (b), the teleoperator turns the steering wheel of the teleoperator station 40 to the left. The graphical indicators 52 representing the second pathway immediately provide feedback on the change performed on the teleoperator station's steering wheel. In contrast, due to the latency of the communication network 30 the drive control commands from the teleoperator station 40 have not yet reached the vehicle 20, so that its drive state did not yet change. Thus, the first pathway (represented by the graphical indicators 51) stays the same for some time. Finally, in Fig. 2 (c), the drive control commands have been received by the vehicle 20 and the measured drive state information has been sent from the vehicle 20 to the teleoperator station 40. Now, the graphical indicators 51 and 52 representing the two pathways are aligned again, signaling a normal operation. By means of this visualization, the latency of the communication network 30 is reported to the teleoperator as an actual time delay between the changes of the graphical indicators 51 and 52 representing the two pathways. This is easier to understand and more intuitive for the teleoperator than e.g. a visualization of the latency as a numerical value or a graphical indicator representing the numerical value.

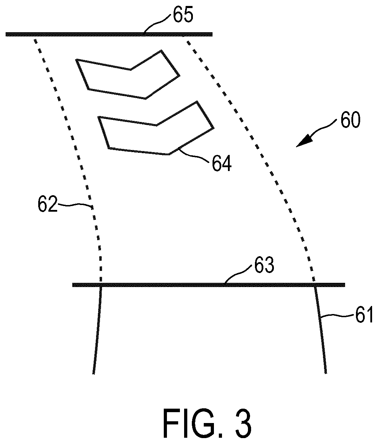

In another variant, the processing unit 42 is adapted to generate the visualization such that it includes graphical indicators 60 representing a combination pathway of the vehicle 20. This is shown schematically and exemplarily in Fig. 3. A first portion 61 (here represented as a solid line) of the combination pathway is determined based on the measured drive state information and a second portion 62 (here represented as a stippled line) of the combination pathway is determined based on the current drive control commands.

The combined-pathway visualization incorporates both the immediate feedback based on the current drive control commands and a feedback from the vehicle 20. In particular, the first portion 61 of the combination pathway, which is determined based on the measured drive state information, is represented by the graphical indicators in the lower part of the visualization. The second portion 62 of the combination pathway, which is determined based on the current drive control commands, is attached to the first portion 61 and represented by the graphical indicators in the upper part of the visualization.

The position at which the first portion 61 transitions into the second portion 62 of the combination pathway is preferable determined by the processing unit 41 based on the latency of the wireless communication network 30. In particular, it may be determined to correspond to the distance covered by the vehicle 20 given its actual drive state during the time period corresponding to the latency of the wireless communication network 30. The transition position may also be represented by graphical indicators 63.

Preferably, the live representation comprises a live video stream of the vehicle's environment. The processing unit 42 can then be adapted to generate the visualization such that the graphical indicators 51 and 52 or 60 representing the two pathways or the combination pathway are overlaid on the live video stream.

The processing unit 42 can additionally be adapted to generate the visualization such that it includes graphical indicators representing one or more of: (i) the actual drive acceleration / deceleration, (ii) an acceleration / deceleration according to the current drive control commands, (iii) a combined acceleration / deceleration determined from (i) and (ii), and (iv) an expected halting position determined from (iii). This is also shown schematically and exemplarily in Fig. 3. In this example, the graphical indicators 64 are provided in the second portion 62 of the combination pathway 60 and represent the acceleration / deceleration according to the current drive control commands. Here, the graphical indicators 64 are generally rectangular (i.e., box-shaped) when the drive speed according to the current drive control commands is constant, but they change their shape to become arrow-shaped in the driving direction or against the driving direction of the vehicle 20 when the drive speed according to the current drive control commands is accelerated or decelerated, respectively. The strength of the array shape thereby indicates the strength of the acceleration / deceleration. In Fig. 3, the graphical indicators 64 are arrow-shaped against the driving direction of the vehicle, indicating that the current drive control commands will decelerate the vehicle 20. Additional graphical indicators 65 represent an expected halting position in the upper part of the visualization. The expected halting position is determined based from a combined acceleration / deceleration, which is determined from the actual drive acceleration / deceleration and the acceleration / deceleration according to the current drive control commands.

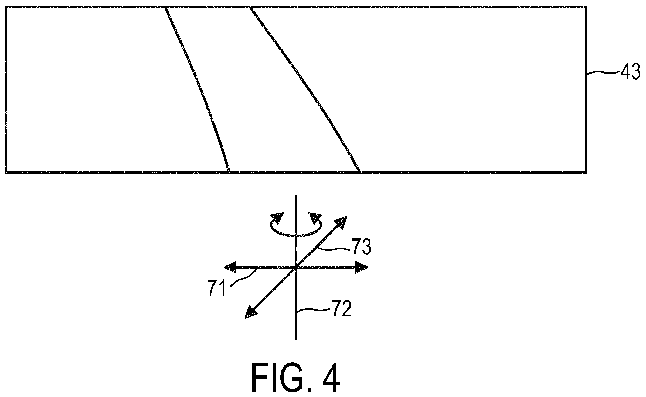

In a further variant, the live representation is also a live video stream, which may be a live panoramic video stream (e.g., it may be a live 180° or 360° video stream) or a live spherical stream. The processing unit 42 is adapted to generate the visualization by adjusting the viewing direction and/or the viewpoint in the live video stream based on the latency and the measured drive state information. This is shown schematically and exemplarily in Fig. 4. The display unit 43 displays the visualization generated by the processing unit 42 to the teleoperator. The visualization comprises the live video stream, but the viewing direction and/or the viewpoint under which the live video stream is displayed is adjusted compared to the viewing direction and/or the viewpoint under which it was captured by the vehicle 20. For example, the viewing direction may be rotated around the axis 72, corresponding to a rotation of the vehicle 20 around its vertical axis, and/or the viewpoint may be moved along the axes 71 and 73, corresponding to a movement of the vehicle 20 on the ground.

It is known from geometry that a change of the viewing direction alone does not result in a change in perspective. Thus, the adjustment of the viewing direction can simply be achieved by shifting a viewport on the live video stream. For example, if the viewing direction is rotated around the axis 72, the viewport is shifted to the left / right on the live video stream. In contrast, a change of the viewpoint also results in a change in perspective, i.e., objects in the environment of the vehicle 20 are seen from a different position, possibly resulting in changes in geometry, occlusions and disocclusions. As these geometrical changes depend on both the magnitude of the viewpoint change and the distance of the objects to the viewpoint, it can be acceptable for smaller changes of the viewpoint and/or objects that are located further away from the viewpoint to not consider the geometrical changes at all. For larger changes of the viewpoint and/or objects that a located closer to the viewpoint, however, it is preferable that the adjustment further comprises a geometrical adjustment of an object depicted in the live video stream. This geometrical adjustment may be based on simple heuristics, e.g., if the viewpoint changes to the right, the object may be artificially skewed to the left, and if the viewpoint changes to the left, the object may be artificially skewed to the right. This artificial skewing may also consider the distance of the object, wherein simple heuristics may be used in order to determine whether the object is located closer to or further away from the viewpoint. For example, the capturing units (here, cameras) for capturing the live video stream may be calibrated and different types of vehicles that appear in road traffic, such small cars, regular cars, sport utility vehicles, motorcycles, vans and trucks, may be assigned default sizes. If, for instance, a regular car is then detected in the live video stream, its distance from the viewpoint can be estimated based on its size in the live video stream and its assigned default size. The amount of skewing applied to the object (e.g. a regular car) can then be chosen based on the estimated distance.

The adjustment of the viewing direction and/or the viewpoint in the live video stream is based on the latency and the measured drive state information, which is sent from the vehicle 20 to the teleoperator station 40, as discussed with reference to the two-pathway and combined pathway visualizations.

The latency may be determined based on synchronization information, such as transmission timestamps. For example, the vehicle 20 and the teleoperator station 40 may have synchronized clocks and the vehicle 20 may transmit timestamps with the live video stream. The teleoperator station 40 can then determine the time delay introduced by the transmission of the live video stream from the vehicle to the teleoperator station 40 via the communication network 30 from the timestamps. The additional time delay introduced by the transmission of the drive control commands from the teleoperator station 40 to the vehicle 20 via the communication network 30 may then be assumed to be the same. Alternatively, the teleoperator station 40 may also transmit timestamps with the drive control commands. The vehicle 20 can then determine the additional time delay from the timestamp and inform the teleoperator station 40 thereof. Based on the latency and the measured drive state information, a new position / orientation in the 'outdated' live video stream can be calculated, in order to best represent the actual current position of the vehicle 20.

While the artificial skewing can to a certain degree approximate the perspective changes that result from a change of the viewpoint, better results can preferably be achieved when the geometrical adjustment is based on an estimated depth information of the object. In this case, the object can be artificially rendered with the correct perspective using techniques such as depth-image-based rendering (DIBR) (see, for example, C. Fehn, "Depth-image-based rendering (DIBR), compression, and transmission for a new approach on 3D-TV", Proceedings of Stereoscopic Displays and Virtual Reality Systems XI, 2004, San Jose, CA, USA).

In addition to the geometrical changes that result from a change in perspective, the geometry of an object can also change due to a movement of the object itself. For example, in the highly dynamic environment of a crowded inner-city area, moving objects may be present in the form of other vehicles, cyclists, pedestrians, and so on. The motion of an object may be estimated in the live video stream and the object may be geometrically adjusted for the movement based on the estimated motion. This may also make use of an estimated depth information of the object, if available. In the extreme case, the whole frame of the live video stream could be artificially rendered to correspond to the current situation based on the delayed live video stream received from the vehicle 20, the estimated depth information and/or motion of the objects, the latency and the measured drive state information.

The depth information of the object and/or the motion of the object may be estimated already in the vehicle 20 and transmitted to the teleoperator station 40 together with the live video stream. For example, the capturing units of the vehicle may comprise, in addition to cameras for capturing the live video stream, depth cameras for capturing associated depth information. Such depth cameras can be based on various principles known in the art, for example, they may comprise time-of-flight (TOF) cameras, laser scanners, or radar sensors, or they may comprise a stereoscopic or multiview camera setup, wherein the depth information is then estimated using image matching techniques. Alternatively, the depth information of the object and/or the motion of the object may only be estimated in the teleoperator station 40, for example, in the processing unit 42. For example, the motion of the object may be estimated by tracking the object over subsequent frames of the live video stream, wherein it is possible to compensate for global motion based on an estimation of the movement of the capturing units (e.g., by tracking static objects, such as buildings, over subsequent frames).

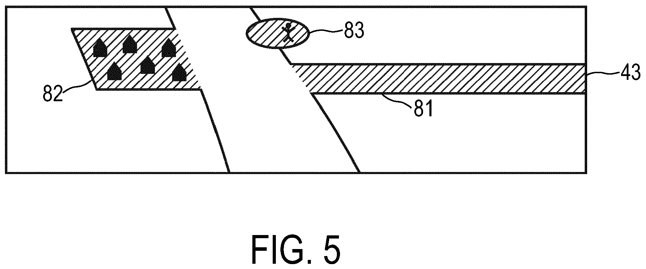

In yet a further variant, the processing unit 42 is adapted to generate the visualization such that it includes graphical indicators representing forbidden areas that the vehicle 20 is not allowed to enter. This is shown schematically and exemplarily in Fig. 5, where forbidden areas represented by graphical indicators 81, 82 and 83 are shown. The forbidden areas can include one or more of: (i) dynamically determined safety areas for moving objects, and (ii) pre-defined forbidden geographical areas. For example, the forbidden area represented by the graphical indicator 83 is a safety area that is dynamically determined for a pedestrian based on an estimated motion of the pedestrian. In contrast, the forbidden areas represented by the graphical indicators 81 and 82 are pre-defined forbidden geographical areas. Here, the graphical indicator 81 represents a one-way street that is pre-defined to be forbidden to be entered in the direction opposite to the allowed driving direction. Moreover, the graphical indicator 82 represents a market square. As can be understood from the above, the pre-definition of a forbidden geographical area can depend on circumstances. For example, the one-way street may not be shown as a pre-defined forbidden geographical area to the teleoperator when he/she remotely drives the vehicle 20 to enter the street in the allowed driving direction. Likewise, the market square may only be shown as a pre-defined forbidden geographical area to the teleoperator on market days or on other days where there is an event on the market square.

Preferably, the control interface 44 is adapted to prevent the teleoperator from remotely driving the vehicle 20 to enter the forbidden areas. This can be achieved by adapting the control interface 44 such that it only generates control commands that do not allow the vehicle 20 to reach the forbidden areas. For example, the control interface 44 may be adapted to reduce the speed of the vehicle 20 or perform an emergency stop when the vehicle 20 is about to enter a forbidden area. Also, when the vehicle 20 is close to a forbidden area, the control interface may be adapted to prevent changing the direction of the vehicle 20 towards the forbidden area.

Still other variants of how the visualization may be generated by the processing unit 42 are described in the following:
For example, in one variant, graphical indicators such a bounding boxes, ghost objects or the like may be used to represent the current position of an object in the live representation of the vehicle's environment sent from the vehicle 20. As described above, this may include estimating the motion of the object as well as a compensation of the global motion.

In another variant, the live representation comprises simplified descriptions of objects and their positions and movements in the vehicle's environment, wherein the processing unit 42 is adapted to generate the visualization as a virtual reality representation of the vehicle's current environment based on the simplified descriptions. For example, the processing unit 42 may be adapted to generate the visualization as a fully virtual video of the current time based on a live representation from the 'past' including prediction of objects, trajectory, speed, location based on a spherical camera / radar sensors / laser scanners / existing maps in order to let the teleoperator control the vehicle 20 as under a non-delayed viewing experience. Therefore, it may be possible to transfer, as the live representation, radar information and/or detected objects (including position and speed) and/or complete or partial point clouds (or wire frames or meshes or similar representations) of the current situation as captured by the vehicle 20. Hereby, the overall quantity of data may be reduced by just transferring metadata or reduced / compressed versions of those live representations to the teleoperator station 40. In the teleoperator station 40, for example, in the processing unit 42, those partial information of the surroundings of the vehicle 20 may be rendered as artificial information into an already known environment map, such as already available data of streets in combination with a street view, et cetera, in order to create a virtual world of the vehicle's environment with a reduced amount of data to be transmitted.

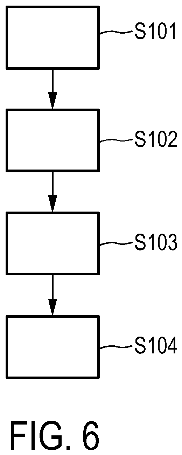

In the following, an embodiment of a teleoperation method for use by a teleoperator to remotely drive a vehicle 20 via a wireless communication network 30, will exemplarily be described with reference to a flowchart shown in Fig. 6.

In step S101, a communication unit 41 receives a live representation of the vehicle's environment from the vehicle 20 and sends drive control commands for controlling the driving of the vehicle 20 to the vehicle 20.

In step S102, a processing unit 42 processes the live representation to generate a visualization of the vehicle's environment that considers a latency of the wireless communication network 30.

in step S103, a display unit 43 displays the visualization to the teleoperator.

In step S104, a control interface (44) is used by the teleoperator to generate the drive control commands in response to the visualization.

The teleoperation method may be performed using the teleoperator station 40 for use by a teleoperator to remotely drive a vehicle 20 via a wireless communication network 30 described with reference to Fig. 1 above.

Other variations to the disclosed embodiments can be understood and effected by those skilled in the art in practicing the claimed invention, from a study of the drawings, the disclosure, and the appended claims.

For example, while solid and stippled lines have been used as graphical indicators 51, 52 and 60 to represent the pathways in Figs. 2 and 3, other forms of graphical indicators may also be used. For example, the first pathway may be shown in the visualization in a different shading or with a different coloring than the second pathway.

Likewise, the graphical indicators 64 representing the acceleration / deceleration according to the current drive control commands in the visualization may not represent the acceleration / deceleration by their form. Instead, they may represent the acceleration / deceleration by different shadings and or colors. For example, the combined pathway may be shown in gray when the drive speed according to the current drive control commands is constant, and it may be shown in green or red when the drive speed according to the current drive control commands is accelerated or decelerated, respectively. The saturation or the transparency of the color may thereby indicate the strength of the acceleration / deceleration.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Any reference signs in the claims should not be construed as limiting the scope.

The present invention relates to a teleoperator station for use by a teleoperator to remotely drive a vehicle via a wireless communication network. The teleoperator station comprises a communication unit for receiving a live representation of the vehicle's environment from the vehicle and for sending drive control commands for controlling the driving of the vehicle to the vehicle. The teleoperator station further comprises a processing unit for processing the live representation to generate a visualization of the vehicle's environment that considers a latency of the wireless communication network, a display unit for displaying the visualization to the teleoperator, and a control interface for use by the teleoperator to generate the drive control commands in response to the visualization.

## Claims

1. A teleoperator station (40) for use by a teleoperator to remotely drive a vehicle (20) via a wireless communication network (30), comprising:
- a communication unit (41) for receiving a live representation of the vehicle's environment from the vehicle (20) and for sending drive control commands for controlling the driving of the vehicle (20) to the vehicle (20);
- a processing unit (42) for processing the live representation to generate a visualization of the vehicle's environment that considers a latency of the wireless communication network (30);
- a display unit (43) for displaying the visualization to the teleoperator; and
- a control interface (44) for use by the teleoperator to generate the drive control commands in response to the visualization,
wherein the communication unit (41) is adapted to further receive measured drive state information indicative of an actual steering state, an actual drive speed and, optionally, an actual drive acceleration / deceleration from the vehicle (20), wherein the processing unit (42) is adapted to generate the visualization based on the measured drive state information, **characterized in that**:
the processing unit (42) is adapted to generate the visualization such that it includes graphical indicators (51, 52) representing two pathways of the vehicle (20), wherein the first pathway is determined based on the measured drive state information and the second pathway is determined based on the current drive control commands, or
the processing unit (42) is adapted to generate the visualization such that it includes graphical indicators (60) representing a combination pathway of the vehicle (20), wherein a first portion (61) of the combination pathway is determined based on the measured drive state information and a second portion (62) of the combination pathway is determined based on the current drive control commands.

2. The teleoperator station (40) as defined in claim 1, wherein the live representation comprises a live video stream of the vehicle's environment, wherein the processing unit (42) is adapted to generate the visualization such that the graphical indicators (51, 52; 60) representing the two pathways or the combination pathway are overlaid on the live video stream.

3. The teleoperator station (40) as defined in claim 1 or 2, wherein the processing unit (42) is adapted to generate the visualization such that it includes graphical indicators (64; 65) representing one or more of: (i) the actual drive acceleration / deceleration, (ii) an acceleration / deceleration according to the current drive control commands, (iii) a combined acceleration / deceleration determined from (i) and (ii), and (iv) an expected halting position determined from (iii).

4. The teleoperator station (40) as defined in any of claims 1 to 3, wherein the live representation comprises a live video stream, wherein the processing unit (42) is adapted to generate the visualization by adjusting the viewing direction and/or the viewpoint in the live video stream based on the latency and the measured drive state information.

5. The teleoperator station (40) as defined in claim 4, wherein the adjustment further comprises a geometrical adjustment of an object depicted in the live video stream.

6. The teleoperator station (40) as defined in claim 5, wherein the geometrical adjustment is based on an estimated depth information of the object and/or an estimated motion of the object.

7. The teleoperator station (40) as defined in any of claims 4 to 6, wherein the live video stream comprises a live panoramic video stream or a live spherical stream.

8. The teleoperator station (40) as defined in any of claims 1 to 7, wherein the processing unit (42) is adapted to generate the visualization such that it includes graphical indicators (81, 82, 83) representing forbidden areas that the vehicle (20) is not allowed to enter.

9. The teleoperator station (40) as defined in claim 8, wherein the forbidden areas include one or more of: (i) dynamically determined safety areas for moving objects, and (ii) pre-defined forbidden geographical areas.

10. The teleoperator station (40) as defined in claim 9, wherein the control interface (44) is adapted to prevent the teleoperator from remotely driving the vehicle (20) to enter the forbidden areas.

11. The teleoperator station (40) as defined in any of claims 1 to 10, wherein the live representation comprises simplified descriptions of objects and their positions and movements in the vehicle's environment, wherein the processing unit (42) is adapted to generate the visualization as a virtual reality representation of the vehicle's current environment based on the simplified descriptions.

12. A system (100) for remotely driving a vehicle (20), comprising:
- a vehicle (20) that is adapted to be remotely driven by a teleoperator via a wireless communication network (30); and
- the teleoperator station (40) as defined in any of claims 1 to 11.

13. A teleoperation method for use by a teleoperator to remotely drive a vehicle (20) via a wireless communication network (30), comprising:
- receiving (S101) a live representation of the vehicle's environment from the vehicle (20) and sending drive control commands for controlling the driving of the vehicle (20) to the vehicle (20), by a communication unit (41);
- processing (S102) the live representation to generate a visualization of the vehicle's environment that considers a latency of the wireless communication network (30), by a processing unit (42);
- displaying (S103) the visualization to the teleoperator, by a display unit (43); and
- using (S104) a control interface (44), by the teleoperator, to generate the drive control commands in response to the visualization,
wherein the communication unit (41) further receives measured drive state information indicative of an actual steering state, an actual drive speed and, optionally, an actual drive acceleration / deceleration from the vehicle (20), wherein the processing unit (42) generates the visualization based on the measured drive state information, **characterized by**:
generating, by the processing unit (42), the visualization such that it includes graphical indicators (51, 52) representing two pathways of the vehicle (20), wherein the first pathway is determined based on the measured drive state information and the second pathway is determined based on the current drive control commands, or
generating, by the processing unit (42), the visualization such that it includes graphical indicators (60) representing a combination pathway of the vehicle (20), wherein a first portion (61) of the combination pathway is determined based on the measured drive state information and a second portion (62) of the combination pathway is determined based on the current drive control commands.

## Patentansprüche

1. Teleoperator-Station (40) zur Verwendung durch einen Teleoperator, um ein Fahrzeug (20) über ein drahtloses Kommunikationsnetzwerk (30) ferngesteuert zu fahren, umfassend:
- eine Kommunikationseinheit (41) zum Empfangen einer Live-Repräsentation der Fahrzeugumgebung von dem Fahrzeug (20) und zum Senden von Fahrsteuerbefehlen zum Steuern des Fahrens des Fahrzeugs (20) an das Fahrzeug (20);
- eine Verarbeitungseinheit (42) zum Verarbeiten der Live-Repräsentation, um eine Visualisierung der Umgebung des Fahrzeugs zu erzeugen, die eine Latenz des drahtlosen Kommunikationsnetzwerks (30) berücksichtigt;
- eine Anzeigeeinheit (43) zum Anzeigen der Visualisierung für den Teleoperator; und
- eine Steuerschnittstelle (44) zur Verwendung durch den Teleoperator, um die Fahrsteuerbefehle in Reaktion auf die Visualisierung zu erzeugen,
wobei die Kommunikationseinheit (41) angepasst ist, um des Weiteren gemessene Fahrzustandsinformationen zu empfangen, die einen tatsächlichen Lenkzustand, eine tatsächliche Fahrgeschwindigkeit und, optional, eine tatsächliche Fahrbeschleunigung/-verzögerung von dem Fahrzeug (20) angeben, wobei die Verarbeitungseinheit (42) angepasst ist, um die Visualisierung basierend auf den gemessenen Fahrzustandsinformationen zu erzeugen, **dadurch gekennzeichnet, dass**:
die Verarbeitungseinheit (42) angepasst ist, um die Visualisierung so zu erzeugen, dass sie grafische Indikatoren (51, 52) enthält, die zwei Pfade des Fahrzeugs (20) repräsentieren, wobei der erste Pfad auf der Grundlage der gemessenen Fahrzustandsinformationen und der zweite Pfad auf der Grundlage der aktuellen Fahrsteuerbefehle bestimmt wird, oder
die Verarbeitungseinheit (42) angepasst ist, um die Visualisierung so zu erzeugen, dass sie grafische Indikatoren (60) enthält, die einen Kombinationspfad des Fahrzeugs (20) repräsentieren, wobei ein erster Teil (61) des Kombinationspfads auf der Grundlage der gemessenen Fahrzustandsinformationen bestimmt wird und ein zweiter Teil (62) des Kombinationspfads auf der Grundlage der aktuellen Fahrsteuerbefehle bestimmt wird.

2. Teleoperator-Station (40) nach Anspruch 1, wobei die Live-Repräsentation einen Live-Videostrom der Fahrzeugumgebung umfasst, wobei die Verarbeitungseinheit (42) angepasst ist, um die Visualisierung so zu erzeugen, dass die grafischen Indikatoren (51, 52; 60), die die zwei Pfade oder den Kombinationspfad darstellen, dem Live-Videostrom überlagert werden.

3. Teleoperator-Station (40) nach Anspruch 1 oder 2, wobei die Verarbeitungseinheit (42) angepasst ist, um die Visualisierung so zu erzeugen, dass sie grafische Indikatoren (64; 65) enthält, die eines oder mehrere der folgenden Elemente repräsentieren: (i) die tatsächliche Fahrbeschleunigung/-verzögerung, (ii) eine Beschleunigung/Verzögerung gemäß den aktuellen Fahrsteuerbefehlen, (iii) eine kombinierte Beschleunigung/Verzögerung, die aus (i) und (ii) bestimmt wird, und (iv) eine erwartete Halteposition, die aus (iii) bestimmt wird.

4. Teleoperator-Station (40) nach einem der Ansprüche 1 bis 3, wobei die Live-Repräsentation einen Live-Videostrom umfasst, wobei die Verarbeitungseinheit (42) angepasst ist, um die Visualisierung durch Anpassen der Blickrichtung und/oder des Blickpunkts in dem Live-Videostrom basierend auf der Latenz und der gemessenen Fahrzustandsinformation zu erzeugen.

5. Teleoperator-Station (40) nach Anspruch 4, wobei die Anpassung des Weiteren eine geometrische Anpassung eines in dem Live-Videostrom dargestellten Objekts umfasst.

6. Teleoperator-Station (40) nach Anspruch 5, wobei die geometrische Anpassung auf einer geschätzten Tiefeninformation des Objekts und/oder einer geschätzten Bewegung des Objekts basiert.

7. Teleoperator-Station (40) nach einem der Ansprüche 4 bis 6, wobei der Live-Videostrom einen Live-Panorama-Videostrom oder einen Live-Sphärenstrom umfasst.

8. Teleoperator-Station (40) nach einem der Ansprüche 1 bis 7, wobei die Verarbeitungseinheit (42) angepasst ist, um die Visualisierung so zu erzeugen, dass sie grafische Indikatoren (81, 82, 83) enthält, die verbotene Bereiche repräsentieren, die das Fahrzeug (20) nicht befahren darf.

9. Teleoperator-Station (40) nach Anspruch 8, wobei die verbotenen Bereiche eines oder mehrere der folgenden Elemente umfassen: (i) dynamisch ermittelte Sicherheitsbereiche für sich bewegende Objekte, und (ii) vordefinierte verbotene geografische Bereiche.

10. Teleoperator-Station (40) nach Anspruch 9, wobei die Steuerschnittstelle (44) angepasst ist, um den Teleoperator daran zu hindern, das Fahrzeug (20) ferngesteuert in die verbotenen Bereiche zu fahren.

11. Teleoperator-Station (40) nach einem der Ansprüche 1 bis 10, wobei die Live-Repräsentation vereinfachte Beschreibungen von Objekten und deren Positionen und Bewegungen in der Umgebung des Fahrzeugs umfasst, wobei die Verarbeitungseinheit (42) angepasst ist, die Visualisierung als eine Virtual-Reality-Repräsentation der aktuellen Umgebung des Fahrzeugs basierend auf den vereinfachten Beschreibungen zu erzeugen.

12. System (100) zum ferngesteuerten Fahren eines Fahrzeugs (20), umfassend:
- ein Fahrzeug (20), das von einem Teleoperator über ein drahtloses Kommunikationsnetzwerk (30) ferngesteuert gefahren werden kann; und
- die Teleoperator-Station (40) nach einem der Ansprüche 1 bis 11.

13. Teleoperationsverfahren zur Verwendung durch einen Teleoperator, um ein Fahrzeug (20) über ein drahtloses Kommunikationsnetzwerk (30) ferngesteuert zu fahren, umfassend:
- Empfangen (S101) einer Live-Repräsentation der Fahrzeugumgebung von dem Fahrzeug (20) und Senden von Fahrsteuerbefehlen zum Steuern des Fahrens des Fahrzeugs (20) an das Fahrzeug (20), durch eine Kommunikationseinheit (41);
- Verarbeiten (S102) der Live-Repräsentation zum Erzeugen einer Visualisierung der Fahrzeugumgebung, die eine Latenz des drahtlosen Kommunikationsnetzes (30) berücksichtigt, durch eine Verarbeitungseinheit (42);
- Anzeigen (S103) der Visualisierung für den Teleoperator durch eine Anzeigeeinheit (43); und
- Verwenden (S104) einer Steuerschnittstelle (44) durch den Teleoperator, um die Fahrsteuerbefehle in Reaktion auf die Visualisierung zu erzeugen,
wobei die Kommunikationseinheit (41) des Weiteren gemessene Fahrzustandsinformationen empfängt, die einen tatsächlichen Lenkzustand, eine tatsächliche Fahrgeschwindigkeit und, optional, eine tatsächliche Fahrbeschleunigung/-verzögerung von dem Fahrzeug (20) angeben, wobei die Verarbeitungseinheit (42) die Visualisierung basierend auf den gemessenen Fahrzustandsinformationen erzeugt, **gekennzeichnet durch**:
Erzeugen der Visualisierung durch die Verarbeitungseinheit (42), so dass sie grafische Indikatoren (51, 52) enthält, die zwei Pfade des Fahrzeugs (20) repräsentieren, wobei der erste Pfad auf der Grundlage der gemessenen Fahrzustandsinformationen und der zweite Pfad auf der Grundlage der aktuellen Fahrsteuerbefehle bestimmt wird, oder
Erzeugen der Visualisierung durch die Verarbeitungseinheit (42), so dass sie grafische Indikatoren (60) enthält, die einen Kombinationspfad des Fahrzeugs (20) repräsentieren, wobei ein erster Teil (61) des Kombinationspfads auf der Grundlage der gemessenen Fahrzustandsinformationen bestimmt wird und ein zweiter Teil (62) des Kombinationspfads auf der Grundlage der aktuellen Fahrsteuerbefehle bestimmt wird.

## Revendications

1. Station de télémanipulateur (40) destinée à être utilisée par un télémanipulateur pour conduire à distance un véhicule (20) via un réseau de communication sans fil (30), comprenant :
- une unité de communication (41) pour recevoir du véhicule (20) une représentation en direct de l'environnement du véhicule et pour envoyer au véhicule (20) des instructions de commande de conduite pour commander la conduite du véhicule (20);
- une unité de traitement (42) pour traiter la représentation en direct pour générer une visualisation de l'environnement du véhicule qui prend en compte une latence du réseau de communication sans fil (30);
- une unité d'affichage (43) pour afficher la visualisation au télémanipulateur, et
- une interface de commande (44) destinée à être utilisée par le télémanipulateur pour générer les instructions de commande de conduite en réponse à la visualisation,
dans lequel l'unité de communication (41) est adaptée pour recevoir en outre des informations d'état de conduite mesurées indiquant un état de direction réel, une vitesse de conduite réelle et, en option, une accélération/décélération de conduite réelle du véhicule (20), dans lequel l'unité de traitement (42) est adaptée pour générer la visualisation sur la base des informations d'état de conduite mesurées, **caractérisée par le fait que**:
l'unité de traitement (42) est adaptée pour générer la visualisation de telle sorte qu'elle comprend des indicateurs graphiques (51, 52) représentant deux chemins du véhicule (20), le premier chemin étant déterminé sur la base des informations d'état de conduite mesurées et le deuxième chemin est déterminé sur la base des instructions de commande de conduite actuelles, ou
l'unité de traitement (42) est adaptée pour générer la visualisation de telle sorte qu'elle comprend des indicateurs graphiques (60) représentant un chemin de combinaison du véhicule (20), une première partie (61) du chemin de combinaison étant déterminée sur la base des informations d'état de conduite mesurées et une deuxième partie (62) du trajet de combinaison est déterminée sur la base des instructions de commande de conduite actuelles.

2. Station de télémanipulateur (40) selon la revendication 1, dans laquelle la représentation en direct comprend un flux vidéo en direct de l'environnement du véhicule, dans laquelle l'unité de traitement (42) est adaptée pour générer la visualisation de telle sorte que les indicateurs graphiques (51, 52; 60) représentant les deux chemins ou le chemin de combinaison sont superposés au flux vidéo en direct.

3. Station de télémanipulateur (40) selon la revendication 1 ou 2, dans laquelle l'unité de traitement (42) est adaptée pour générer la visualisation de telle sorte qu'elle comprend des indicateurs graphiques (64 ; 65) représentant un ou plusieurs de: (i) l'accélération/la décélération de conduite réelle, (ii) une accélération/décélération selon les instructions de commande de conduite actuelles, (iii) une accélération/décélération combinée déterminée à partir de (i) et de (ii), et (iv) une position d'arrêt attendue déterminée à partir de (iii).

4. Station de télémanipulateur (40) selon l'une quelconque des revendications 1 à 3, dans laquelle la représentation en direct comprend un flux vidéo en direct, dans laquelle l'unité de traitement (42) est adaptée pour générer la visualisation en ajustant la direction de regard et/ou le point de vue dans le flux vidéo en direct sur la base de la latence et des informations d'état de conduite mesurées.

5. Station de télémanipulateur (40) selon la revendication 4, dans laquelle l'ajustement comprend en outre un ajustement géométrique d'un objet représenté dans le flux vidéo en direct.

6. Station de télémanipulateur (40) selon la revendication 5, dans laquelle l'ajustement géométrique est basé sur une information de profondeur estimée de l'objet et/ou un mouvement estimé de l'objet.

7. Station de télémanipulateur (40) selon l'une quelconque des revendications 4 à 6, dans laquelle le flux vidéo en direct comprend un flux vidéo panoramique en direct ou un flux sphérique en direct.

8. Station de télémanipulateur (40) selon l'une quelconque des revendications 1 à 7, dans laquelle l'unité de traitement (42) est adaptée pour générer la visualisation de telle sorte qu'elle comprend des indicateurs graphiques (81, 82, 83) représentant des zones interdites que le véhicule (20) n'est pas autorisé à entrer.

9. Station de télémanipulateur (40) selon la revendication 8, dans laquelle les zones interdites comprennent une ou plusieurs parmi: (i) des zones de sécurité déterminées dynamiquement pour des objets en mouvement, et (ii) des zones géographiques interdites prédéfinies.

10. Station de télémanipulateur (40) selon la revendication 9, dans laquelle l'interface de commande (44) est adaptée pour empêcher le télémanipulateur de conduire à distance le véhicule (20) pour entrer dans les zones interdites.

11. Station de télémanipulateur (40) selon l'une quelconque des revendications 1 à 10, dans laquelle la représentation en direct comprend des descriptions simplifiées d'objets et de leurs positions et mouvements dans l'environnement du véhicule, dans laquelle l'unité de traitement (42) est adaptée pour générer la visualisation en tant que représentation de réalité virtuelle de l'environnement actuel du véhicule sur la base des descriptions simplifiées.

12. Système (100) de conduite à distance d'un véhicule (20), comprenant:
- un véhicule (20) qui est adapté pour être téléguidé par un télémanipulateur via un réseau de communication sans fil (30); et
- la station de télémanipulateur (40) selon l'une quelconque des revendications 1 à 11.

13. Procédé de télémanipulation destiné à être utilisé par un télémanipulateur pour conduire à distance un véhicule (20) via un réseau de communication sans fil (30), comprenant :
- recevoir (S101) du véhicule (20) une représentation en direct de l'environnement du véhicule et envoyer au véhicule (20) des instructions de commande de conduite pour commander la conduite du véhicule (20), par une unité de communication (41);
- traiter (S102), par une unité de traitement (42), la représentation en direct pour générer une visualisation de l'environnement du véhicule qui prend en compte une latence du réseau de communication sans fil (30);
- afficher (S103) la visualisation au télémanipulateur par une unité d'affichage (43); et
- utiliser (S104) une interface de commande (44), par le télémanipulateur, pour générer les instructions de commande de conduite en réponse à la visualisation,
dans lequel l'unité de communication (41) reçoit en outre des informations d'état de conduite mesurées indiquant un état de direction réel, une vitesse de conduite réelle et, en option, une accélération/décélération de conduite réelle du véhicule (20), dans lequel l'unité de traitement (42) génère la visualisation sur la base des informations d'état de conduite mesurées, **caractérisé par**:
générer, par l'unité de traitement (42), la visualisation de telle sorte qu'elle comprend des indicateurs graphiques (51, 52) représentant deux chemins du véhicule (20), le premier chemin étant déterminé sur la base des informations d'état de conduite mesurées et le deuxième chemin est déterminé sur la base des instructions de commande de conduite actuelles, ou
générer, par l'unité de traitement (42), la visualisation de telle sorte qu'elle comprend des indicateurs graphiques (60) représentant un chemin de combinaison du véhicule (20), dans lequel une première partie (61) du chemin de combinaison est déterminée sur la base des informations d'état de conduite mesurées et une deuxième partie (62) du chemin de combinaison est déterminée sur la base des instructions de commande de conduite actuelles.
